# EUROPÄISCHE PATENTANMELDUNG

(11) **EP 1 689 091 A1**
(43) Veröffentlichungstag der Anmeldung: **09.08.2006**
(21) Anmeldenummer: 04793756.0
(22) Anmeldetag: 07.10.2004
(51) Int. Cl.: H04B 3/54, G08B 25/06

(54) **SYSTEM ZUR DATENSAMMLUNG DURCH EIN ALTERNATIVES AKTUELLES VERSORGUNGSNETZWERK**

(30) Priorität: 31.10.2003 RU 2003131977
(71) Anmelder: "Dis Plus" Ltd., Moscow 105484 (RU)
(72) Erfinder: SOKOLOV, Yuri Borisovich, Moskovskaya obl., 141120 (RU); SAHAROV, Valery Viktorovich, Nizhny Novgorod, 603137 (RU)
(74) Vertreter: Jeck, Anton
(86) Internationale Anmeldenummer: PCT/RU2004/000389
(87) Internationale Veröffentlichungsnummer: WO 2005/043773

(57) **Zusammenfassung**

Es handelt sich um ein Datenerfassungssystem im Wechselstromverteilungsnetz, wobei dieses System aus einem Hauptblock und einigen untergeordneten Blöcken besteht. Der Hauptblock sendet ein voraus bekanntes Synchronisierungssignal aus, das aus einem oder mehreren Zeichen besteht und gleichzeitig von allen untergeordneten Blöcken empfangen wird. Alle Blöcke des Systems verwenden die Zeitpunkte des Durchlaufs der Hauptharmonischen der Kraftspannung im Stromnetz durch das Nullniveau als Ereignisse der Zeichensynchronisierung. Der Hauptblock sendet das genannte Synchronisierungssignal streng periodisch aus, wobei der untergeordnete Block mit der Nummer N seine Daten im Laufe der n-ten Halbperiode der Hauptnetzspannung ab dem Zeitpunkt der Synchronisierungssignalbeendigung überträgt.

## Beschreibung

Die Erfindung gehört zum Gebiet der Datenerfassung und -übertragung in Wechselstromverteilungsnetzen und kann für die langsame Datenerfassung von fernliegenden Sensoren (Zählern, Wasser- und Wärmeverbrauchzählern usw.) bzw. für die Steuerung von fernliegenden Endeinrichtungen (Straßenbeleuchtungslampen, Ausschaltungseinrichtungen usw.) verwendet werden.

Durch die US 6 021 137 ist ein Datenerfassungssystem im Wechselstromverteilungsnetz bekannt, in dem der Hauptblock des Systems ein so genanntes Breitbandsignal der Datenabfrage aussendet, das zugleich von allen untergeordneten Systemblöcken übernommen und festgestellt wird. Als Antwort darauf übermitteln die untergeordneten Blöcke der Reihe nach ihre Daten. Der Hauptnachteil dieses Systems ist der Mangel an Zeichensynchronisierung, die für alle Netzblöcke einheitlich ist. Deswegen müssen die untergeordneten Blöcke kontinuierlich und in Echtzeit eine komplizierte Zahlenverarbeitung der Eingangsspannung ausführen, um das Anfangssegment des Breitbandsignals der Datenabfrage zu finden. Diese Umstände stellen hohe Ansprüche an die Rechenleistung der Gerätetechnik der untergeordneten Blöcke, so dass deren praktischer Einsatz wesentlich erschwert und verteuert wird.

Die vorliegende Erfindung löst die Aufgabe der Schaffung eines störfesten und preiswerten Datenerfassungssystems, das die Daten von mehreren langsamen Sensoren, die an das Wechselstromverteilungsnetz angeschlossen sind, beispielsweise Zähler, Wasser- und Wärmeverbrauchszähler usw., erfassen kann.

Das technische Ergebnis ist eine bedeutende Vereinfachung der inneren Einrichtung der untergeordneten Blöcke und eine Erhöhung der Störfestigkeit des Systems. Das angegebene, technische Ergebnis dieser Erfindung wird dadurch erreicht, dass ein Komparator mit Hysterese zur Gerätetechnik jedes Blocks im Datenerfassungssystem gehört; dabei ist der Steuereingang des Komparators am ersten Kabel des Kraftstromnetzes und der Signaleingang des Komparators am zweiten Kabel des Kraftstromnetzes angeschlossen. Die Zeitpunkte der Umschaltung des Komparatorzustands werden als Ereignisse der Zeichensynchronisierung verwendet, d.h. sie dienen für diesen Block als Signal für den Anfang der Übertragung oder des Empfangs des nächsten Bits oder vergrößern den Inhalt des Innenzählers der Halbperioden der Netzspannung um Eins.

Die gesamte Charakteristik solcher Informationsquellen, wie beispielsweise Zähler, Wasser-, Gas- und Wärmeverbrauchszähler, ist eine geringe Informationsanzahl je Tag. So werden die Zählerangaben des einphasigen Einfachtarifzählers in der Regel nur einmal pro Monat bei den Elektrizitätsverbrauchsberechnungen abgelesen. Es ist klar, dass die Durchschnittsgeschwindigkeit, mit der ein solcher Zähler die Information erzeugt, sehr gering ist (etwa 6 Dezimalziffern je Monat). Daher ist es unnötig, die Modems mit mittlerer und geringer Geschwindigkeit für das Kraftstromnetz (Geschwindigkeit der Übermittlung der Kilobit-Einheit oder sogar Hunderter Bit pro Sekunde) für die Sammlung so langsam veränderter Angaben zu verwenden. Es führt bewusst dazu, dass das Datenerfassungssystem mit einem solchen Aufbau sehr kompliziert wird und dass nur ungenügend hohe Kennziffern der Störfestigkeit im Vergleich zu theoretisch möglichen Kennziffern erreicht werden.

In den Zeichnungen sind Schaltungsanordnungen dargestellt, die die Ausführung des Datenerfassungssystems im Wechselstromverteilungsnetz und das auf seiner Basis entstehende Verbindungssystem erläutern. Es zeigen:
- Fig. 1: einen Ablaufplan des Datenerfassungssystems gemäß der Erfindung,
- Fig. 2: die Gesamtstruktur des Datenaustausches im Datenerfassungssystem und
- Fig. 3: Einzelheiten des Verfahrens zur Modulation des Signals für die Zeitsynchronisation, das vom Hauptblock des Systems ausgesendet wird.

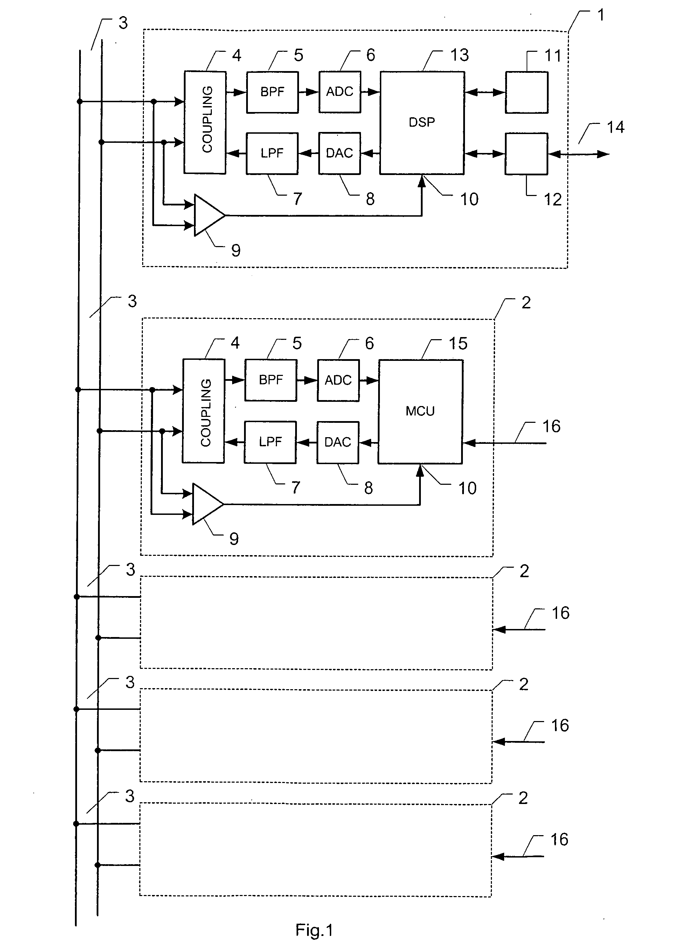

Das Datenerfassungssystem in Fig. 1 besteht aus einem Hauptblock 1 und einigen Unterblöcken 2. Alle Systemblöcke werden elektrisch mit ein und demselben Kraftstromnetzsegment 3 verdrahtet. Die inneren Einrichtungen des Hauptblocks 1 und der Unterblöcke 2 sind ähnlich aufgebaut, und jede innere Einrichtung weist folgende Bestandteile auf: einen Schutz- und Signalkopplungsblock 4, ein Bandfilter 5, einen Analog-Digital-Umsetzer (A-D-Umsetzer) 6, ein Niederfrequenzfilter 7, einen Digital-Analog-Umsetzer (D-A-Umsetzer) 8, einen eine Hysterese aufweisenden Komparator 9 und einen Interrupteingang 10. Der Unterschied besteht darin, dass der Hauptblock des Systems ferner ein Speichergerät 11, einen äußeren Schnittstellenblock 12, einen leistungsstarken Prozessor 13 für digitale Verarbeitung und einen Verbindungskanal 14 aufweist, während ein einfacherer und billigerer Unterblock ferner nur eine Universalmikrosteuerung 15 umfasst, die durch einen Verbindungskanal 16 die für die Übermittlung zum Hauptblock bestimmten Daten von einem lokalen Sensor empfängt. Der Frequenzarbeitsbereich des Systems beträgt 20-95 kHz.

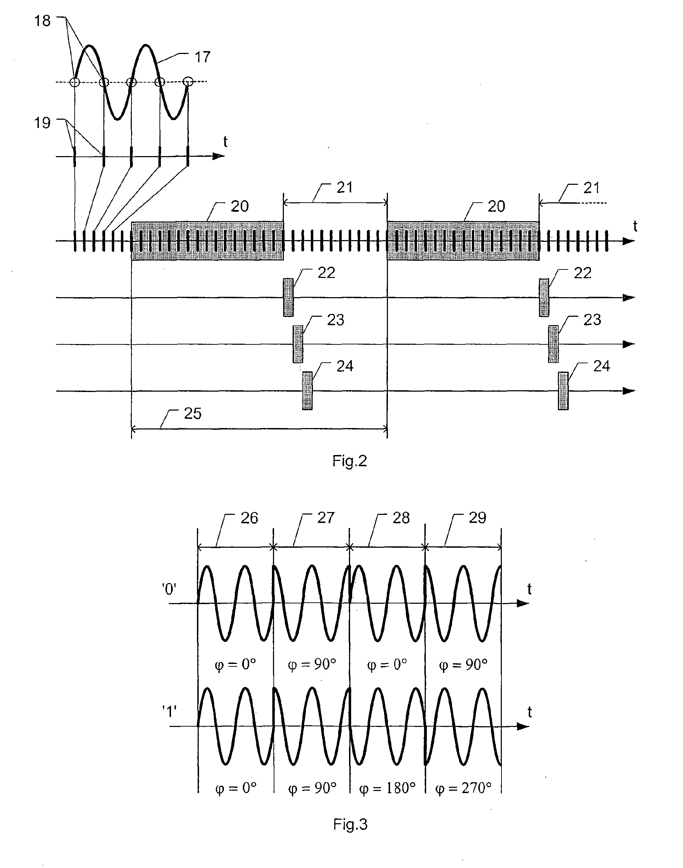

Das Datenerfassungssystem funktioniert folgendermaßen (Figuren 1 und 2). Die Komparatoren 9 bestimmen die Zeitpunkte, in denen die Netzspannung 17 dem Nullwert 18 gleich ist, und bilden dadurch eine für das ganze System fast synchrone Zeitmarkenfolge 19, die für die Primär-(bit)-Synchronisation aller Blöcke bestimmt ist. Der Hauptblock des Systems sendet streng periodisch ein langes Synchronisierungssignal 20 aus, das gleichzeitig von allen untergeordneten Systemblöcken empfangen und festgestellt wird. Die aufeinander folgenden Synchronisierungssignale 20 werden durch Datenübertragungsintervalle 21 getrennt, in deren Verlauf der Hauptblock des Systems nur für den Empfang funktioniert. Die untergeordneten Systemblöcken übertragen dem Hauptblock ihre Daten im Zeitscheibenverfahren, ein Bit als Antwort auf jedes Synchronisierungssignal, wobei der untergeordnete Block Nr. 1 seine Daten 22 im ersten Bitsegment des Datenübertragungsintervalls überträgt, der untergeordnete Block Nr. 2 seine Daten 23 im zweiten Bitsegment überträgt, der untergeordnete Block Nr. 3 seine Daten 24 im dritten Bitsegment überträgt usw. Die Gesamtdauer des Datenübertragungsintervalls wird derart ausgewählt, dass alle untergeordneten Systemblöcke ihr nächstes Bit übertragen könnten. Das Synchronisationssignal und das Datenübertragungsintervall bilden zusammen einen Datenaustauschrahmen 25. Für die Modulation des Synchronisierungssignals 20, das vom Hauptblock 1 übertragen wird, wird das Verfahren zur modifizierten, relativen Phasenmodulation verwendet (Fig. 3). Das Synchronisierungssignal 20 wird zuerst durch den Digitalsignalprozessor 13 des Hauptblocks in Digitalform gebildet, dann wird es in eine Stufenspannung im A-D-Umsetzer 8 umgesetzt, im Niederfrequenzfilter 7 gefiltert und gerät über die Kopplungsstelle 4 in das Kraftstromnetz 3.

Für die Modulation des Synchronisierungssignals 20, das vom Hauptblock 1 übertragen wird, wird das Verfahren zur modifizierten, relativen Phasenmodulation verwendet (Fig. 3). Das Synchronisierungssignal besteht dabei aus einer größeren Anzahl von Bitintervallen, in deren Verlauf der Hauptblock des Systems eine einzigartige 256-Bit-Synchronaufeinanderfolge überträgt, wobei jedes Bit im Laufe einer Halbperiode der Netzspannung übertragen und durch vier nacheinander übertragene Abschnitte 26-29 der Sinusschwingung kodiert wird. Die übertragenen Daten werden durch die Aufeinanderfolge der Anfangsphasen aller vier Abschnitte kodiert. Die logische Null wird durch die Aufeinanderfolge der Anfangsphasen {0°, 90°, 0°, 90°} übertragen, während die unlogische Eins durch die Aufeinanderfolge {0°, 90°, 180°, 270°} übertragen wird. Obwohl dieses Modulationsverfahren energetisch weniger effizient als traditionelle Modulationsverfahren mit zwei Abschnitten ist, hat es den Vorteil, dass die Rechenkosten des Empfängers beim Empfang und bei der Signaldemodulation um die Hälfte verringert werden, weil es in diesem Fall im Unterschied zum traditionellen Verfahren keine Notwendigkeit gibt, zwei gleichzeitig funktionierende Signalbearbeitungskanäle, nämlich den Direktkanal und den Quadraturkanal, zu betreiben. Das Spektrum des Synchronsignals wird durch die Verwendung einer achtfachen zyklischen Umschaltung der Übertragungsfrequenz des einzelnen Bits nach dem Liniengesetz verbreitet. Die Übermittlungsfrequenzen werden dabei derart ausgewählt, dass sie gleiche Intervalle aufweisen und maximal gleichmäßig den Arbeitsbereich der Frequenzen im System besetzen. So wird das erste Bit des Synchronisierungssignals mit der ersten, der niedrigsten und für alle untergeordneten Blöcke bekannten Frequenz, das zweite Bit mit der zweiten für alle untergeordneten Blöcke bekannten Frequenz usw. übertragen, bis zur letzten, der achten und höchsten Frequenz. Danach wird die Aufeinanderfolge der Umschaltung der Übertragungsfrequenz noch 31 Mal wiederholt; infolgedessen werden alle 256 Bits der Synchronaufeinanderfolge mit der Verwendung des fast ganzen Arbeitsbereichs der Frequenzen übertragen.

Der Bitempfänger des untergeordneten Blocks funktioniert folgendermaßen. Aus dem Kraftstromnetz 3 verläuft das Synchronisierungssignal über die Kopplungsstelle 4 und das Bandfilter 5; es wird durch den A-D-Umsetzer 6 umgesetzt und durch die Mikrosteuerung 15 in gleichen Zeitintervallen gelesen, die der Halbperiode der Frequenz entsprechen, auf die der Empfänger abgestimmt ist. Dann werden die ungeraden Abrufe des A-D-Umsetzers mittels der Mikrosteuerung zum Inhalt des Signalspeichers addiert, während die geraden Abrufe subtrahiert werden. Am Ende jedes Abschnitts der Bitsignalsynchronisierung wird der Inhalt des Signalspeichers gespeichert, und der Speicher selbst wird zurückgesetzt. So sind nach der Vollendung des letzten, vierten Abschnitts im Speicher der Mikrosteuerung vier Zahlen geblieben: X₁, Y₁, Y₂, Y₂. Es ist klar, dass diese paarweise genommenen Zahlen die Projektionen der Zeigerdarstellung des Signals vom lokalen Empfängeroszillator (untergeordneter Block) auf die Quadraturachsen des Senderoszillator (Hauptblock) sind. Hat der Hauptblock des Systems in diesem Bitintervall eine "0" übertragen, werden die Vektoren {X₁,Y₁} und {X₂,Y₂} zu einer Seite gerichtet; wurde ein "1" übertragen, dann werden diese Vektoren zur gegenüberliegenden Seite übertragen. Der Empfänger des untergeordneten Blocks beendet den Prozess der Bitdemodulation mit der Multiplikation des Vektors {X₁, Y₁} mit dem konjugierten Vektor in der Komplexfläche mit der folgenden Bestimmung des Zeichens vom Realteil des Produkts, der in diesem Fall gleich X₁X₂-Y₁Y₂ ist.

Ist das Zeichen des Realteils des Produkts positiv, wurde "0" übertragen; ist es negativ, wurde "1" übertragen. Die Frequenz, mit der die Mikrosteuerung die Abrufe aus dem Eingangssignal vornimmt und die gleich der verdoppelten Frequenz des aufgenommenen Signals ist, verändert sich von Bit zu Bit nach demselben zyklischen Gesetz, wie auch auf der Seite des Senders des Hauptblocks. Die vom Empfänger demodulierten Bits des Synchronisierungssignals geraten dann in ein 256-Bit-Schieberegister in der Form "der erste geht hinein, der letzte geht hinaus", dessen Inhalt jedes Mal nach der Einnahme des folgenden Bits mit der für den Empfänger bekannten Synchronaufeinanderfolge verglichen wird. Übersteigt die Anzahl der Kongruenzen das bestimmte, voraus angegebene Niveau (der Niveauwert wird nach der Wahrscheinlichkeit von falschen Alarmen im Rauschen festgestellt), findet der Empfänger das Synchronisierungssignal. Der Empfänger wechselt die Frequenz seiner Abstimmung für jedes folgende Bitintervall linear (Frequenzabtastung) entsprechend der erwarteten Frequenz der Übermittlung des folgenden Bits durch den Sender des Hauptblocks. Durch das beschriebene Arbeitsverfahren des Empfängers kann nicht nur das Synchronsignal, sondern auch die Tatsache seiner Modulation festgestellt werden. Beispielsweise kann in einem einfachen Fall der Hauptblock das Synchronisierungssignal übertragen, das entweder der linearen Synchronaufeinanderfolge oder der inversen Aufeinanderfolge entspricht, d.h. in der alle Nullen durch Einsen und umgekehrt ersetzt werden. In diesem Fall zählt der Empfänger zusammen mit der Anzahl der Kongruenzen P auch die Anzahl der Inkongruenzen N zwischen dem Speicher des Schieberegisters und der für ihn bekannten linearen Form der Synchronaufeinanderfolge. Übersteigt P oder N die angegebene Grenze der Feststellung, stellt der Empfänger die Synchronaufeinanderfolge fest, und der Hauptblock übertragt dabei das Bit "O" oder "G" allen untergeordneten Blöcken. Der Empfänger des untergeordneten Blocks hat zwei Hauptarbeitsabläufe, nämlich einen Ablauf der Synchronisierungssignalsuche und einen Ablauf der Verbindung. Er geht in den Suchablauf gleich nach der Einschaltung des Netzgeräts über; dieser Ablauf stellt den Rahmensynchronismus zwischen den untergeordneten Blöcken und dem Hauptblock des Systems fest. Der Empfänger des untergeordneten Blocks funktioniert selbst in allen Abläufen fast gleich; der Unterschied besteht nur darin, dass der Empfänger im Suchablauf ununterbrochen funktioniert, wobei er periodisch die Anfangsphase seiner Frequenzabtastung wechselt, bis sie mit der Anfangsphase der Frequenzabtastung des Senders im Hauptblock zusammenfällt und das erste Synchronisierungssignal empfangen wird. Danach fängt der Sender des untergeordneten Blocks an, periodisch zu wirken, wobei je 1 Bit pro Datenübertragungsintervall 21 übertragen wird, und der Empfänger des untergeordneten Blocks geht in den Verbindungsbetrieb über und schaltet sich nur dafür ein, um das erwartete Vorhandensein des Synchronisierungssignals 20 am Anfang des nachfolgenden Rahmens 25 zu bestätigen. Seine Daten über den Zustand des fernliegenden Sensors, die vom untergeordneten Block durch den Verbindungskanal 16 empfangen wurden, überträgt der Sender des untergeordneten Blocks in Form von 64-Bit-Paketen, je 1 Bit in jedem Rahmen 25. Die Pakete werden kontinuierlich, pausenlos nacheinander übertragen.

Um die vorliegende Erfindung auf die erforderliche Erfindungshöhe zu prüfen, wurde eine zusätzliche Recherche nach den bekannten Merkmalen durchgeführt, die mit den Unterscheidungsmerkmalen des Prototyps der vorliegenden Erfindung zusammenfallen. Es wurde festgestellt, dass die vorliegende Erfindung für den Fachmann nicht aus dem Stand der Technik abgeleitet werden kann, weil keine technischen Lösungen bekannt sind, bei denen anstatt des Datenabfragesignals von den fernliegenden Sensoren das nicht unbedingt stets anwesende Signal der Zeitsynchronisation verwendet und der vom Hauptblock des Systems oder von einer anderen speziellen Einrichtung ausgesendet wird.

Die oben genannten Angaben bewirken bei der Verwendung der angemeldeten Erfindung die Erfüllung der folgenden Bedingungen:
- das Mittel, das die vorliegende Erfindung bei seiner Ausführung darstellt, ist für den Einsatz im Bereich der Stromnetzverbindung bestimmt, insbesondere in Systemen zur Datenerfassung von fernliegenden Sensoren;
- es wurde die Möglichkeit der Ausführung der vorliegenden Erfindung in der Form, in der diese in den Patentansprüchen dargelegt wird, durch die in der Anmeldung genannten oder bis zum Prioritätsdatum bekannten Mittel und Verfahren bestätigt;
- das Mittel, das die vorliegende Erfindung bei seiner Ausführung darstellt, kann das vom Anmelder vorgesehene, technische Ergebnis erreichen.

## Patentansprüche

1. Datenerfassungssystem im Wechselstromverteilungsnetz, wobei dieses System aus einem Hauptblock und einigen untergeordneten Blöcken besteht und der Hauptblock ein voraus bekanntes Synchronisierungssignal aussendet, das aus einem oder mehreren Zeichen besteht und gleichzeitig von allen untergeordneten Blöcken empfangen wird,
**dadurch gekennzeichnet,**
**dass** alle Blöcke des Systems die Zeitpunkte des Durchlaufs der Hauptharmonischen der Kraftspannung im Stromnetz durch das Nullniveau als Ereignisse der Zeichensynchronisierung verwenden und dass der Hauptblock das genannte Synchronisierungssignal streng periodisch aussendet, wobei der untergeordnete Block mit der Nummer N seine Daten im Laufe der n-ten Halbperiode der Hauptnetzspannung ab dem Zeitpunkt der Synchronisierungssignalbeendigung überträgt.

2. Datenerfassungssystem nach Anspruch 1,
**dadurch gekennzeichnet,**
**dass** die untergeordneten Systemblöcke beim zeitweiligen Fehlen des Synchronisierungssignals die Übertragung der Daten im Laufe ihrer Halbperioden der Hauptnetzspannung fortsetzen und ihren zeitlichen Zustand nach dem Wert der bekannten Periode der Synchronisierungssignalaussendung berechnen.

3. Datenerfassungssystem nach Anspruch 1,
**dadurch gekennzeichnet,**
**dass** die Quelle des Synchronisierungssignals nicht der Hauptblock, sondern eine einzelne Einrichtung ist.

4. Datenerfassungssystem nach Anspruch 1,
**dadurch gekennzeichnet,**
**dass** das Synchronisierungssignal moduliert und für die Breitbandübertragung der Daten vom Hauptblock zu den untergeordneten Blöcken verwendet wird.

5. Datenerfassungssystem nach Anspruch 1,
**dadurch gekennzeichnet,**
**dass** alle Signale, die vom Hauptblock und von den untergeordneten Blöcken ausgesendet werden, eine Dauer aufweisen, die 1/3 der Halbperiode der Netzspannung entspricht, und dass diese Signale hinsichtlich der Zeitpunkte des Durchlaufs der Hauptharmonischen der Kraftspannung im Stromnetz durch das Nullniveau zentriert sind.
